# EUROPEAN PATENT APPLICATION

(11) **EP 2 647 958 A1**
(43) Date of publication of application: **09.10.2013**
(21) Application number: 11844566.7
(22) Date of filing: 28.11.2011
(51) Int. Cl.: G01C 21/34, G01C 21/00, G01S 19/25, G08G 1/005

(54) **MOBILE TERMINAL, SYSTEM AND METHOD**

(30) Priority: 02.12.2010 JP 2010269611
(71) Applicant: NTT DoCoMo, Inc., Tokyo 100-6150 (JP)
(72) Inventor: TAKAHASHI, Makoto, Tokyo 100-6150 (JP)
(74) Representative: Maury, Richard Philip
(86) International application number: PCT/JP2011/077409
(87) International publication number: WO 2012/073898

(57) **Abstract**

One aspect of the present invention relates to a mobile terminal having an autonomous navigation function including a map application unit configured to perform map matching of a current position of the mobile terminal onto a route from a departure point to a destination point of a user of the mobile terminal in map information, a measurement unit configured to detect movement of the mobile terminal and provide sensor information indicative of the movement of the user, a position calculation unit configured to calculate a movement amount of the mobile terminal from a reference position based on the sensor information and calculate a current position of the mobile terminal based on the calculated movement amount and the reference position, and a reroute detection unit configured to compare a first distance between the calculated current position of the mobile terminal and the reference position with a second distance between the map-matched current position of the mobile terminal and the reference position, wherein if the first distance is sufficiently greater than the second distance, the reroute detection unit requests the map application unit to search for a route again.

## Description

### TECHNICAL FIELD

The present invention relates to a mobile terminal having an autonomous navigation function.

### BACKGROUND ART

Recently, development of positional information services in indoor environments is expected due to improvement of accuracy of positioning techniques using base stations and emergence of new positioning techniques such as a WLAN (Wireless Local Area Network) positioning technique for mobile terminals.

As one of the new indoor positioning techniques, attention to an autonomous navigation technique using various sensor information items from an accelerometer sensor, a geomagnetic sensor and others has been drawn. However, there is a problem that errors of measurement using only sensors may be accumulated, and it is important to perform positional correction periodically by using information items other than the sensor information items so as to improve the accuracy. For example, see JP 2007-47114, JP 2006-337114 and JP 2006-242703.

### SUMMARY OF INVENTION

### [PROBLEM TO BE SOLVED BY THE INVENTION]

In a conventional autonomous navigation targeted to mobile terminals, an accelerometer sensor, a geomagnetic sensor, a gyro sensor and others are used to measure the position of the mobile terminals by estimating a movement amount from an initial position and calculating positional coordinates.

However, since measurement errors may be accumulated in position estimation calculated in autonomous navigation by means of sensors, it is difficult to determine whether the position estimation is erroneous due to the error accumulation or whether a user is actually walking in a route different from a setup route.

In conjunction with the above problem, one object of the present invention is to provide a mobile terminal, a system and a method that detects appropriate reroute timings.

### [MEANS FOR SOLVING THE PROBLEM]

In order to overcome the above problem, one aspect of the present invention relates to a mobile terminal having an autonomous navigation function including a map application unit configured to perform map matching of a current position of the mobile terminal onto a route from a departure point to a destination point of a user of the mobile terminal in map information, a measurement unit configured to detect movement of the mobile terminal and provide sensor information indicative of the movement of the user, a position calculation unit configured to calculate a movement amount of the mobile terminal from a reference position based on the sensor information and calculate a current position of the mobile terminal based on the calculated movement amount and the reference position, and a reroute detection unit configured to compare a first distance between the calculated current position of the mobile terminal and the reference position with a second distance between the map-matched current position of the mobile terminal and the reference position, wherein if the first distance is sufficiently greater than the second distance, the reroute detection unit requests the map application unit to search for a route again.

Another aspect of the present invention relates to a system including a mobile terminal having an autonomous navigation function and a server communicatively connected to the mobile terminal, the server performing map matching of a current position of the mobile terminal onto a route from a departure point to a destination point of a user of the mobile terminal in map information and indicating the map-matched position on the route to the mobile terminal, the mobile terminal including a measurement unit configured to detect movement of the mobile terminal and provide sensor information indicative of the movement of the user, a position calculation unit configured to calculate a movement amount of the mobile terminal from a reference position based on the sensor information and calculate the current position of the mobile terminal based on the calculated movement amount and the reference position and a reroute detection unit configured to compare a first distance between the calculated current position of the mobile terminal and the reference position with a second distance between the map-matched current position of the mobile terminal and the reference position, wherein if the first distance is sufficiently greater than the second distance, the reroute detection unit requests the map application unit to search for a route again.

A further aspect of the present invention relates to a method for use in a mobile terminal having an autonomous navigation function including performing map matching of a current position of the mobile terminal onto a route from a departure point to a destination point of a user of the mobile terminal in map information, detecting movement of the mobile terminal and providing sensor information indicative of the movement of the user, calculating a movement amount of the mobile terminal from a reference position based on the sensor information and calculating a current position of the mobile terminal based on the calculated movement amount and the reference position, and comparing a first distance between the calculated current position of the mobile terminal and the reference position with a second distance between the map-matched current position of the mobile terminal and the reference position, and if the first distance is sufficiently greater than the second distance, performing searches for a route again.

### [ADVANTAGE OF THE INVENTION]

According to the present invention, it is possible to provide a mobile terminal, a system and a method that detects appropriate reroute timings.

### BRIEF DESCRIPTION OF DRAWINGS

FIG. 1 illustrates an exemplary functional arrangement of a mobile terminal according to one embodiment of the present invention;
FIG. 2 is a flowchart illustrating an exemplary autonomous navigation operation in a mobile terminal according to one embodiment of the present invention;
FIG. 3 is a flowchart illustrating a reroute detection operation according to one embodiment of the present invention; and
FIG. 4 is a flowchart illustrating a reroute detection operation according to another embodiment of the present invention.

### EMBODIMENTS FOR CARRYING OUT THE INVENTION

Embodiments of the present invention are described below with reference to the drawings.

A mobile terminal according to embodiments of the present invention detects appropriate reroute timings by acquiring and comparing two positional information pieces, that is, positional information of a mobile terminal map-matched onto a setup route from user's input departure point to user' s input destination point and positional information (not map-matched) of the mobile terminal calculated from sensor information measured by an autonomous navigation function.

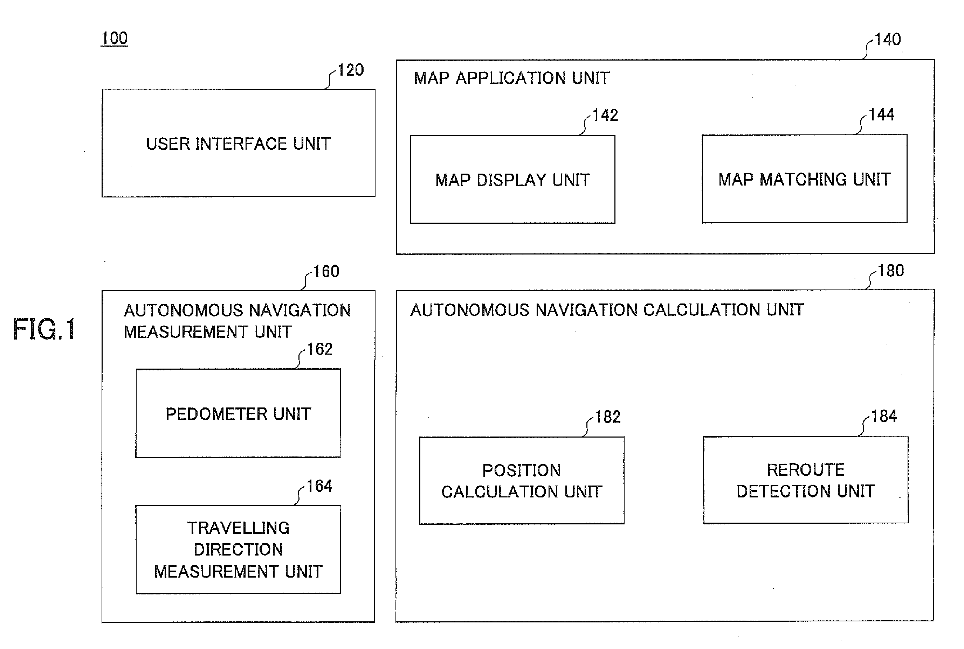

Initially, an arrangement of a mobile terminal according to one embodiment of the present invention is described with reference to FIG. 1.

A mobile terminal according to this embodiment is typically a portable information terminal, such as a cellular phone terminal or a smart phone, that can acquire position of the mobile terminal by means of an application installed in the mobile terminal or information from an external device that can communicate via a network (not shown). Typically, the mobile terminal consists of one or more various hardware resources such as an auxiliary storage device, a memory device, a CPU, a communication device, a display device, an input device and a measurement device. The auxiliary storage device consists of a hard disk, a flash memory or others and stores programs or data for implementing various operations as stated below. The memory device consists of a RAM (Random Access Memory) or others and in response to receipt of an instruction to start the programs, reads the programs from the auxiliary storage device and loads the programs therein. The CPU serves as a processor for processing information and implements various functions as stated below in accordance with the programs stored in the memory device. The communication device consists of various communication circuits for wired and/or wireless connections with other devices such as a server via a network. The communication device according to this embodiment further includes a reception circuit for implementing a GPS (Global Positioning System) function. The display device consists of a display or others and displays contents received via the network or a GUI (Graphical User Interface) in accordance with programs. The input device typically consists of operation buttons, a keyboard, a mouse or others and is used for a user of the mobile terminal to input various manipulation commands. The measurement device consists of various sensors, such as an accelerometer sensor, a geomagnetic sensor and a gyro sensor, to measure movement of the mobile terminal for implementing the autonomous navigation function. Note that the mobile terminal of the present invention is not limited to the above hardware arrangement and may include any other appropriate hardware arrangement such as circuits or others for implementing various functions as stated below.

FIG. 1 illustrates an exemplary function arrangement of a mobile terminal according to one embodiment of the present invention. In FIG. 1, a mobile terminal 100 includes a user interface unit 120, a map application unit 140, an autonomous navigation measurement unit 160 and an autonomous navigation calculation unit 180.

When a user inputs a departure point and a destination point via the input device, the user interface unit 120 provides the map application unit 140 with positional information on the supplied departure and destination points. Typically, the departure point is a current position, and the positional information on the current position acquired by means of the GPS function in the mobile terminal 100 may be supplied to the map application unit 140. Also, the destination point may be an address of user' s input destination point, a point specified on map information displayed by the map application unit 140, or a building, a facility or a store specified via other applications, and the positional information derived from the specified position may be supplied to the map application unit 140.

Upon receiving the positional information regarding the departure and destination points from the user interface unit 120, the map application unit 140 sets a route from the specified departure point to the specified destination point, and when the current position of the mobile terminal 100 calculated by the autonomous navigation calculation unit 180 deviates from the setup route, uses any appropriate map matching technique to correct the current position of the mobile terminal 100 onto the setup route.

As illustrated in FIG. 1, the map application unit 140 includes a map display unit 142 and a map matching unit 144.

The map display unit 142 sets a route from the departure point to the destination point based on the positional information on the departure and destination points supplied from the user interface unit 120 and provides the map matching unit 144 with the setup route. The setting of route may be performed by determining the route from the departure point to the destination point by using any appropriate navigation algorithm with reference to the map information stored in the map application unit 140. Typically, the shortest route from the departure point to the destination point is selected, but the setting of route is not limited to it. The route may be set in any appropriate method. Upon setting the route from the departure point to the destination point, the map display unit 142 generates map data for display in order to display the setup route to the user. If there are several candidate routes from the departure point to the destination point, the map display unit 142 may generate map data for display for one route selected from the several routes as the route for display and provide the user interface unit 120 with the generated map data for display. Also, the map display unit 142 may provide the map matching unit 144 with the other routes as candidate routes, although the map display unit 142 does not generate map data for display for the other routes.

The map matching unit 144 uses any appropriate map matching technique to correct the current position of the mobile terminal 100 calculated by the autonomous navigation calculation unit 180 based on the sensor information. Specifically, upon receiving the setup route from the map display unit 142, the map matching unit 144 reviews the setup route with reference to map information stored in the map application unit 140. Then, the map matching unit 144 periodically receives the current position of the mobile terminal 100 calculated by the autonomous navigation calculation unit 180 based on the sensor information and determines whether the received current position deviates from the setup route by a predefined distance. If the received current position deviates from the setup route by the predefined distance, the map matching unit 144 uses any appropriate map matching technique to correct the current position by mapping the current position of the mobile terminal 100 onto the setup route. After correcting the current position, the map matching unit 144 provides the autonomous navigation calculation unit 180 with the corrected current position.

In this embodiment, the map application unit 140 is installed within the mobile terminal 100, but the present invention is not limited to it. In another embodiment, the map application unit 140 may be installed in an external server that can communicate with the mobile terminal 100. In other words, when the user interface unit 120 sends the server the positional information regarding user's incoming departure and destination points, the server may perform the above-stated operations and determine the setup route of the mobile terminal 100. When the server corrects the current position that is calculated by the mobile terminal 100 and is periodically transmitted from the mobile terminal, the server may return the post-corrected current position to the mobile terminal 100.

The autonomous navigation measurement unit 160 measures various data regarding movement of the mobile terminal 100 and provides the autonomous navigation calculation unit 180 with the measured data as sensor information. As illustrated in FIG. 1, the autonomous calculation measurement unit 160 includes a pedometer unit 162 and a travelling direction measurement unit 164.

The pedometer unit 162 monitors walking of a user carrying the mobile terminal 100 and measures the number of steps the user has taken. The pedometer unit 162 can be typically implemented by an accelerometer sensor but is not limited to it. The pedometer unit 162 may be implemented by any other appropriate device that can measure the number of user's steps or the walking distance.

The travelling direction measurement unit 164 monitors walking of a user carrying the mobile terminal 100 and detects the travelling direction of the user' s walking. Although the travelling direction measurement unit 164 can be typically implemented by a geomagnetic sensor or a gyro sensor, the travelling direction measurement unit 164 is not limited to it. The travelling direction measurement unit 164 may be implemented by any other appropriate device that can measure the travelling direction of the user.

The autonomous navigation measurement unit 160 provides the autonomous navigation calculation unit 180 with the number of user's steps measured by the pedometer measurement unit 162 and the user's travelling direction measured by the travelling direction measurement unit 164 as sensor information. The sensor information may be supplied to the autonomous navigation calculation unit 180 at any appropriate timing such as in response to a request from the autonomous navigation calculation unit 180 or others, in response to start of user's walking or on a periodic basis.

Upon acquiring the sensor information such as the number of user's steps and the travelling direction of the mobile terminal 100 measured by the autonomous navigation measurement unit 160, the autonomous navigation calculation unit 180 calculates the current position of the mobile terminal 100 based on the sensor information and provides the map application unit 140 with the calculated current position. As stated above, if the calculated current position deviates from the setup route, the map application unit 140 performs map matching of the received current position calculated by the autonomous navigation calculation unit 180 onto the setup route and sends back the map-matched current position to the autonomous navigation calculation unit 180. Upon receiving the current position corrected in accordance with the map matching, the autonomous navigation calculation unit 180 compares the current position corrected in accordance with the map matching with the current position calculated by itself and determines whether the user has changed the route (reroute) into a route different from the setup route. If it is determined that the user has rerouted, the autonomous navigation calculation unit 180 requests the map application unit 140 to search for a route again.

As illustrated in FIG. 1, the autonomous navigation calculation unit 180 includes a position calculation unit 182 and a reroute detection unit 184.

The position calculation unit 182 calculates a movement amount of the mobile terminal 100 during autonomous navigation based on the sensor information supplied from the autonomous navigation measurement unit 160, determines the current position of the mobile terminal 100 by adding the calculated movement amount to a current setup reference point and provides the map application unit 140 with the positional information, such as the longitude and the latitude, of the determined current position. Specifically, the position calculation unit 182 uses the measured number of user's steps and the measured travelling direction in the sensor information to derive the walking distance by multiplying the length of user's stride (typically, a subtraction of 1 m from user's input height) with the measured number of steps and calculate the movement amount from the reference point based on the derived walking distance and the measured travelling direction. The position calculation unit 182 initially sets the latitude and the longitude of the departure point of the setup route as the reference point and finds the distance and direction of the movement from the reference point based on the walking distance estimated from the number of user's steps and the course of travelling direction.

As stated above, when the current position of the mobile terminal 100 calculated by the position calculation unit 182 deviates from the setup route, the map application unit 140 performs the map matching to correct the calculated current position onto the setup route and indicates the post-corrected current position A to the autonomous navigation calculation unit 180. In this embodiment, when the autonomous navigation calculation unit 180 receives the post-corrected current position A, the position calculation unit 182 does not initiate correction based on the post-corrected current position A immediately but continues in calculating the position of the mobile terminal 100 based on the pre-corrected current position B subsequently.

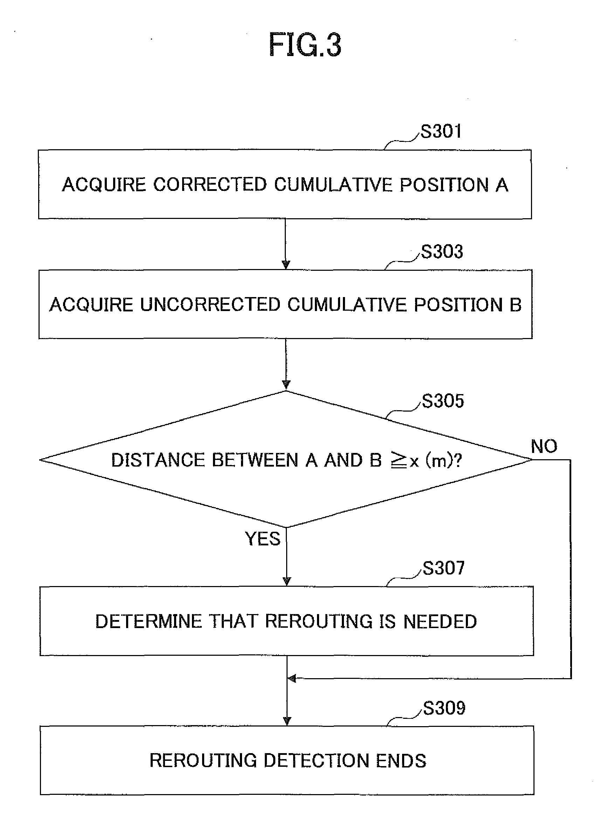

The reroute detection unit 184 determines whether the current position B calculated by the position calculation unit 182 includes measurement errors and accordingly is to be corrected into the position A map-matched by the map application unit 140 onto the setup route or whether the current position B calculated by the position calculation unit 182 is not to be corrected into the position A map-matched by the map application unit 140 onto the setup route due to user's route change into a route different from the setup route. If the current position B calculated by the position calculation unit 182 is to be corrected into the position A on the setup route, that is, if the current position B includes an error due to autonomous navigation, the reroute detection unit 184 instructs the position calculation unit 182 to correct the current position B into the position A on the setup route. On the other hand, if the current position B calculated by the position calculation unit 182 is not to be corrected into the position A on the setup route, that is, if the user is walking in a route different from the setup route, the reroute detection unit 184 requests the map application unit 140 to search for the setup route again. Specific operations of the above reroute determination operation are with reference to FIGS. 3-4 in detail below.

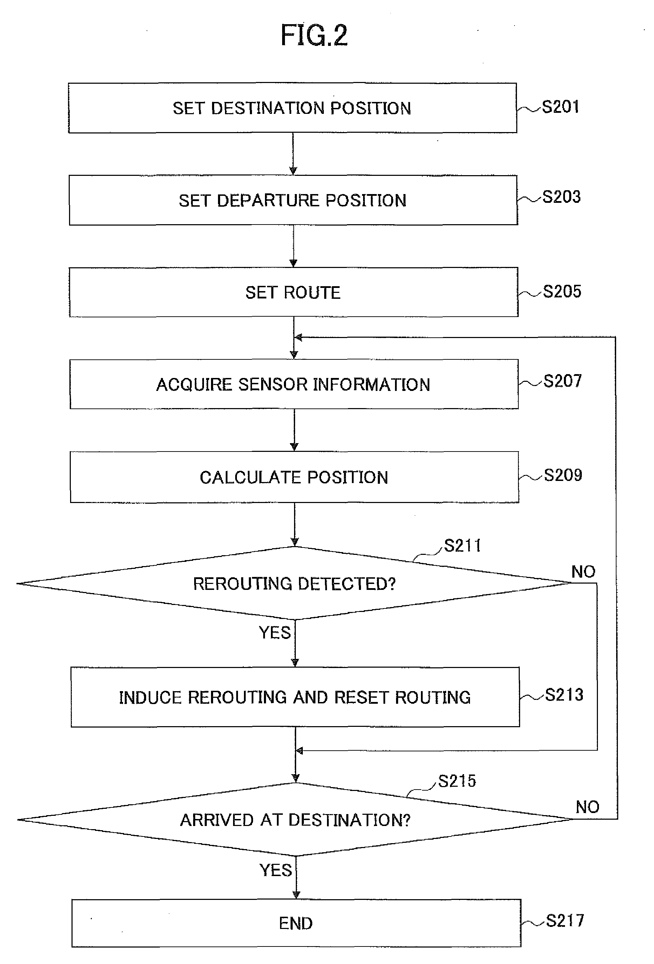

Next, an exemplary operation of a mobile terminal according to one embodiment of the present invention is described with reference to FIG. 2. FIG. 2 is a flowchart illustrating an exemplary autonomous navigation operation in a mobile terminal according to one embodiment of the present invention.

As illustrated in FIG. 2, at step S201, a user sets a destination point to the user interface unit 120 via an input device of the mobile terminal 100. As stated above, the user may set the destination point by inputting an address of the destination. Also, the user may set the destination point by specifying a point on map information displayed by the map application unit 140 on a display device of the mobile terminal 100. Also, the user may set the destination point by specifying a building, a facility, a store or others displayed via other applications.

At step S203, the user sets a departure point to the user interface unit 120 via the input device of the mobile terminal 100. Typically, the departure point may be set to the current position by default. On the other hand, the user may set a specific departure point different from the current position via the input device of the mobile terminal 100. For example, the user may set the departure point by inputting an address of the departure point. Also, the user may set the departure point by specifying a point on the map information displayed by the map application unit 140 on a display device of the mobile terminal 100. Also, the user may set the departure point by specifying a building, a facility, a store or others displayed via other applications.

At step S205, the map application unit 140 can use any appropriate navigation method to determine a route for the setup departure and destination points.

At step S207, the autonomous navigation calculation unit 180 acquires sensor information measured by the autonomous navigation measurement unit 160.

At step S209, the autonomous navigation calculation unit 180 calculates the current position B of the mobile terminal 100 based on the acquired sensor information and provides the map application unit 140 with the calculated current position B. The map application unit 140 uses any appropriate map matching method to determine whether the received current position is to be map-matched onto the setup route. For example, the map application unit 140 may determine whether the received current position deviates from the setup route by greater than or equal to a predefined distance and if the received current position deviates by greater than or equal to the predefined distance, perform the map matching so that the current position of the mobile terminal 100 can be map-matched to the nearest point on the setup route from the received current position. After correcting the current position, the map application unit 140 transmits the post-corrected current position A to the autonomous navigation calculation unit 180. Upon receiving the post-corrected current position A from the map application unit 140, the autonomous navigation calculation unit 180 does not correct the calculated current position B with the post-corrected current position A immediately but stores the post-corrected current position A.

At step S211, the autonomous navigation calculation unit 180 determines whether the setup route is to be changed. In other words, the autonomous navigation calculation unit 180 determines whether the calculated current position B is to be corrected into the current position A map-matched by the map application unit 140 onto the setup route or whether to request the map application unit 140 to set a new route due to user's route change to the route different from the setup route. Specific operations at step S211 are described with reference to FIGS. 3-4 in detail below.

If it is not determined that the setup route must be changed (S211: N), the autonomous navigation calculation unit 180 corrects the calculated current position B into the map-matched current position A and determines whether the current position A corrected at step S215 is the destination point. Then, the autonomous navigation calculation unit 180 performs the subsequent position calculation based on the post-corrected current position A.

On the other hand, if it is determined that the setup route must be changed (S211: Y), the autonomous navigation calculation unit 180 determines that the user is walking in a route different from the setup route, and the flow proceeds to step S213.

At step S213, the autonomous navigation calculation unit 180 requests the map application unit 140 to search for the setup route based on the current position B again. In response to the search request, the map application unit 140 searches for a new route to the destination point based on the current position B again.

At step S215, the autonomous navigation calculation unit 180 determines whether the user has arrived at the destination point based on the current position B. If it is determined that the user has arrived at the destination point (S215: Y), the autonomous navigation operation ends. On the other hand, if the user has not arrived at the destination point yet (S215: N), the flow returns to step S207, and the autonomous navigation operation continues.

Next, the reroute detection operation at step S211 by the autonomous navigation calculation unit 180 according to one embodiment of the present invention is described with reference to FIG. 3 in detail. FIG. 3 is a flowchart illustrating the reroute detection operation according to one embodiment of the present invention.

As illustrated in FIG. 3, at step S301, the reroute detection unit 184 acquires the post-corrected current position A map-matched by the map application unit 140 onto the setup route for the current position B calculated by the position calculation unit 182 at step S209.

At step S303, the reroute detection unit 184 acquires the current position B calculated by the position detection unit 182.

At step S305, the reroute detection unit 184 calculates distance AB between the post-corrected current position A and the pre-corrected current position B and determines whether the calculated distance AB is greater than or equal to a predefined threshold x meters. If the calculated distance is greater than or equal to the threshold x meters (S305: Y), at step S307, the reroute detection unit 184 determines that the user is walking in a route different from the setup route and requests the map application unit 140 to search for a route again. On the other hand, if the calculated distance AB is less than the threshold x meter (S305: N), the reroute detection unit 184 determines that the user is walking in the setup route, and the flow proceeds to step S309.

At step S309, the reroute detection unit 184 ends the reroute detection operation.

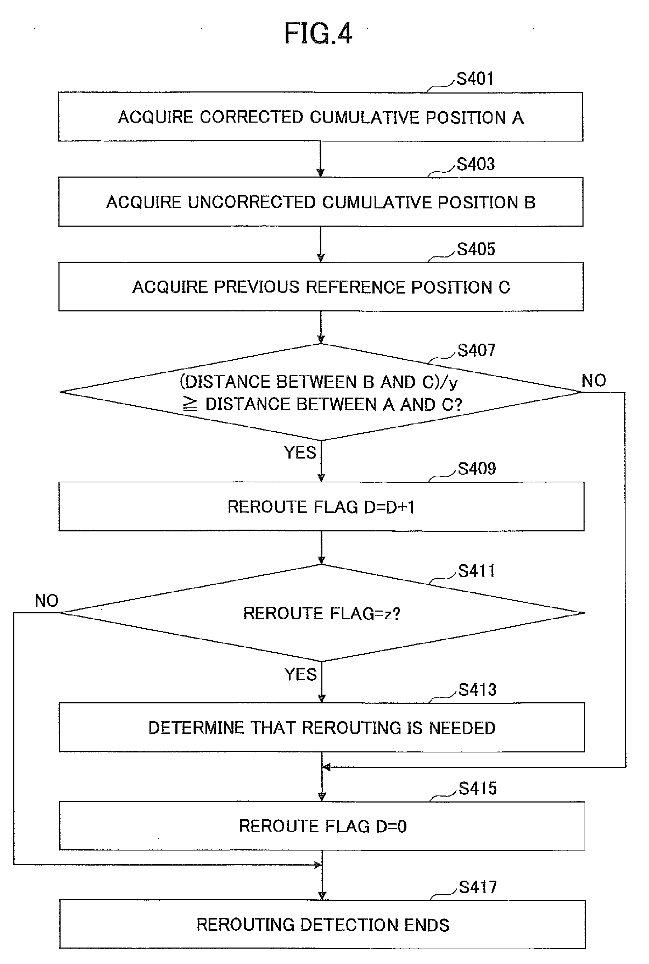

Next, the reroute detection operation at step S211 by the autonomous navigation calculation unit 180 according to another embodiment of the present invention is described with reference to FIG. 4. FIG. 4 is a flowchart illustrating the reroute detection operation according to another embodiment of the present invention. This embodiment is preferred in cases where the mobile terminal 100 is used in underground areas. In general, lattice-arranged streets are provided in the underground areas, and there may be several available routes from a departure point to a destination point. For this reason, if the user has changed to a route different from the setup route, for example, if the user has changed to a neighboring route parallel to the setup route, there is a likelihood that map matching onto the original setup route may be inappropriately performed. This embodiment is effective to avoid such inappropriate map matching specific to mobile terminals such as a mobile phone.

As illustrated in FIG. 4, at step S401, the reroute detection unit 184 acquires the post-corrected current position A map-matched by the map application unit 140 onto the setup route for the current position B calculated by the position calculation unit 182 at step S209.

At step S403, the reroute detection unit 184 acquires the current position B calculated by the position detection unit 182.

At step S405, the reroute detection unit 184 acquires position C associated with the previous reference point used as a basis of calculating the current position B.

At step S407, the reroute detection unit 184 calculates distance between the reference point C and the pre-corrected current position B, that is, a movement amount of the mobile terminal 100 derived from sensor information supplied from the autonomous navigation measurement unit 140. Further, the reroute detection unit 184 calculates distance AC between the reference point C and the post-corrected current position A, that is, a movement amount of the mobile terminal 100 recognized by the map application unit 140. The reroute detection unit 184 compares the distance BC with the distance AC and determines whether the distance BC is sufficiently greater than the distance AC by determining whether a value obtained by dividing the distance BC by any value y greater than 1 is greater than or equal to the distance AC. In cases where the user has turned the setup route at a right angle and entered a different route, the position A after application of the map matching onto the setup route by the map application unit 140 remains almost unchanged, which characteristic of the map matching is taken into account. Based on this characteristic, the distance AC after application of the map matching may be estimated to be significantly smaller than user's actual movement amount BC. Note that the divisor y is set to any appropriate value to prevent inappropriate detection of user's route change.

If the distance BC is sufficiently greater than the distance AC (S407: Y), the reroute detection unit 184 increments reroute flag D indicative of the number of determination times, where it has been determined that the rerouting must be performed at step S409, and determines whether the incremented value of the reroute flag D has reached a predefined threshold z. If it is determined that the rerouting must be performed based on only one time of determination at step S407, it may lead to erroneous determination. Accordingly, if it has been determined in the certain consecutive number of times that the rerouting must be performed, the map application unit 140 is requested to search for the route again. The threshold z may be set to a value to reduce a likelihood of erroneous determination sufficiently, for example, five times.

On the other hand, if the distance BC is not sufficiently greater than the distance AC (S407: N), the reroute detection unit 184 determines that the user is walking in the setup route, and the flow proceeds to step S415.

If the incremented reroute flag D is less than the threshold z at step S411 (S411: N), the reroute detection unit 184 determines that the rerouting does not have to be performed at the current timing and maintains the reroute flag D, and the reroute detection operation ends. On the other hand, if the incremented reroute flag D is equal to the threshold z (S411: Y), the reroute detection unit 184 determines that the user moves to a route different from the setup route and the map application unit 140 must search for the route again. At step S213, the reroute detection unit 184 requests the map application unit 140 to search for the route again.

At step S413, the reroute detection unit 184 resets the reroute flag D, and the reroute detection operation ends.

In the above embodiment, the reroute detection unit 184 determines whether the user is walking in a route different from the setup route by determining whether the distance BC is sufficiently greater than the distance AC. However, the present invention is not limited to it. In other embodiments, if the direction of the setup route is almost orthogonal to the travelling direction of the user, the reroute detection unit 184 may determine that the user is walking in the route different from the setup route. In further embodiments, the reroute detection unit 184 may determine that the user is walking in the route different from the setup route in consideration of both the distance and the travelling direction.

Although the embodiments of the present invention have been described in detail, the present invention is not limited to the above-stated specific embodiments and can be changed and modified within the scope of the present invention defined in claims.

This international patent application is based on Japanese Priority Application No. 2010-269611 filed on December 2, 2010, the entire contents of which are hereby incorporated by reference.

### LIST OF REFERENCE SYMBOLS

- 100:: mobile terminal
- 120:: user interface unit
- 140:: map application unit
- 160:: autonomous navigation measurement unit
- 180:: autonomous navigation calculation unit
- 182:: position calculation unit
- 184:: reroute detection unit

## Claims

1. A mobile terminal having an autonomous navigation function, comprising:
a map application unit configured to perform map matching of a current position of the mobile terminal onto a route from a departure point to a destination point of a user of the mobile terminal in map information;
a measurement unit configured to detect movement of the mobile terminal and provide sensor information indicative of the movement of the user;
a position calculation unit configured to calculate a movement amount of the mobile terminal from a reference position based on the sensor information and calculate a current position of the mobile terminal based on the calculated movement amount and the reference position; and
a reroute detection unit configured to compare a first distance between the calculated current position of the mobile terminal and the reference position with a second distance between the map-matched current position of the mobile terminal and the reference position, wherein if the first distance is sufficiently greater than the second distance, the reroute detection unit requests the map application unit to search for a route again.

2. The mobile terminal as claimed in claim 1, wherein if the current position of the mobile terminal calculated by the position calculation unit deviates from the route by a predefined distance, the map application unit performs map matching to a nearest point on the route from the calculated current position of the mobile terminal.

3. The mobile terminal as claimed in claim 2, wherein if a value obtained by dividing the first distance by a predefined divisor is greater than or equal to the second distance, the reroute detection unit determines that the first distance is sufficiently greater than the second distance.

4. The mobile terminal as claimed in claim 3, wherein if it has been determined predefined consecutive determination times that the value obtained by dividing the first distance by the predefined divisor is greater than the second distance, the reroute detection unit determines that the first distance is sufficiently greater than the second distance.

5. The mobile terminal as claimed in claim 1, wherein upon a request for searching for a route again from the reroute detection unit, the map application unit detects a route from the calculated current position of the mobile terminal to the destination point.

6. The mobile terminal as claimed in claim 1, wherein the measurement unit comprises:
a pedometer unit configured to detect a number of steps of a user of the mobile terminal; and
a travelling direction detection unit configured to detect a travelling direction of the mobile terminal, wherein
the position calculation unit calculates a movement amount of the mobile terminal based on the number of steps of the user detected by the pedometer unit from the reference position and the travelling direction of the user detected by the travelling direction detection unit from the reference position.

7. A system, comprising:
a mobile terminal having an autonomous navigation function; and
a server communicatively connected to the mobile terminal,
the server performing map matching of a current position of the mobile terminal onto a route from a departure point to a destination point of a user of the mobile terminal in map information and indicating the map-matched position on the route to the mobile terminal,
the mobile terminal comprising:
a measurement unit configured to detect movement of the mobile terminal and provide sensor information indicative of the movement of the user;
a position calculation unit configured to calculate a movement amount of the mobile terminal from a reference position based on the sensor information and calculate the current position of the mobile terminal based on the calculated movement amount and the reference position; and
a reroute detection unit configured to compare a first distance between the calculated current position of the mobile terminal and the reference position with a second distance between the map-matched current position of the mobile terminal and the reference position, wherein if the first distance is sufficiently greater than the second distance, the reroute detection unit requests the map application unit to search for a route again.

8. A method for use in a mobile terminal having an autonomous navigation function, comprising:
performing map matching of a current position of the mobile terminal onto a route from a departure point to a destination point of a user of the mobile terminal in map information;
detecting movement of the mobile terminal and providing sensor information indicative of the movement of the user;
calculating a movement amount of the mobile terminal from a reference position based on the sensor information and calculating a current position of the mobile terminal based on the calculated movement amount and the reference position; and
comparing a first distance between the calculated current position of the mobile terminal and the reference position with a second distance between the map-matched current position of the mobile terminal and the reference position, and if the first distance is sufficiently greater than the second distance, performing searches for a route again.
